# FASCICULE DE BREVET EUROPEEN

(11) **EP 2 841 509 B1**
(45) Date de publication et mention de la délivrance du brevet: **01.09.2021**
(21) Numéro de dépôt: 13725289.6
(22) Date de dépôt: 24.04.2013
(51) Int. Cl.: C09D 4/00, C08J 7/00, C09D 11/00, C09D 133/00, C09J 7/00

(54) **COMPOSITION DE VERNIS À VISCOSITÉ FAIBLE POUR SUBSTRAT IMPRIMÉ PAR JET D'ENCRE**
NIEDRIGVISKOSE LACKZUSAMMENSETZUNG FÜR EIN DURCH TINTENSTRAHLDRUCK BEDRUCKTES SUBSTRAT
LOW-VISCOSITY VARNISH COMPOSITION FOR SUBSTRATE PRINTED BY INKJET

(30) Priorité: 24.04.2012 FR 1253745
(43) Date de publication de la demande: 04.03.2015
(73) Titulaire: MGI FRANCE, 94200 Ivry sur Seine (FR)
(72) Inventeur: ABERGEL, Edmond, 75012 Paris (FR); ALLAIS, Pierre, 94204 Ivry Sur Seine (FR)
(74) Mandataire: Debay, Damien
(86) Numéro de dépôt international: PCT/EP2013/058562
(87) Numéro de publication internationale: WO 2013/160385

(56) Documents cités:
- EP-A1- 2 204 401
- WO-A2-02/46323
- US-A1- 2005 176 841
- US-A1- 2006 030 634
- US-A1- 2008 255 264
- US-A1- 2011 045 199
- US-A1- 2011 288 198
- None

## Description

La présente invention se rapporte au domaine des couches de protection pour substrats, de préférence pour substrats imprimés, et plus particulièrement au domaine des vernis déposés par jet d'encre qui ne nécessite pas un chauffage important lors de son dépôt grâce à sa caractéristique de faible viscosité.

Au cours d'une impression, une encre est déposée sur la surface d'un substrat, ce substrat pouvant être, par exemple, du papier ou du plastique. Il est alors courant de recouvrir la surface imprimée de ce substrat par une couche de protection. Cette couche de protection complète la fixation de l'image imprimée sur le substrat tout en garantissant la résistance de l'impression contre certaines agressions extérieures comme par exemple des projections, voire la lumière, la chaleur ou l'humidité. Le dépôt de cette couche de protection sur le substrat imprimé est effectué, par exemple, en faisant intervenir un système d'impression par jet d'encre pour favoriser la sélectivité des zones de dépôt. Le vernis permet aussi de personnaliser le document en faisant apparaître des zones avec des motifs en vernis et d'autres zones sans vernis.

EP 2 204 401 A1, US 2008/255264 A1, WO 02/46323 A2, US 2006/030634 A1, US 2011/288198 A1, US 2005/176841 A1 et US 2011/045199 A décrivent des différentes composition de vernis comprenant des oligomères durcissables, des monomères durcissables et des photo-initiateurs. En particulier D1-D6 n'anticipent pas le rapport en poids entre oligomère et monomère et la combinaison avec la viscosité des oligomères et/ou de la composition comme revendiqué dans la présente revendication 1.

La demande actuelle concerne des vernis à faibles viscosités car les nouvelles têtes d'impression demandent l'utilisation de produits à faibles viscosités. Cependant, la diminution des viscosités des vernis nécessaire à l'utilisation des têtes d'impression utilisant les dernières technologies pose un problème de séchage ou de polymérisation du vernis après impression. En effet, moins le vernis est visqueux, plus le séchage ou la polymérisation du vernis prend du temps et plus les cadences d'impression sont diminuées si l'on réduit la vitesse de transfert des substrats imprimés dans le four ultraviolet pour permettre une polymérisation suffisante. De plus, le séchage ou polymérisation par ultraviolet présentent l'inconvénient de chauffer le substrat imprimé, ce qui peut être préjudiciable. Par ailleurs, avec les nouvelles têtes à jet d'encre acceptant des viscosités plus faibles, si on veut utiliser des vernis de viscosité élevée, non adaptée à la viscosité nécessaire pour ces nouvelles têtes, on doit augmenter la température pour diminuer la viscosité. Outre une consommation d'énergie préjudiciable, ces températures élevées influencent la durée de vie des têtes d'impression ou nécessitent l'utilisation de matériaux spécifiques rendant les têtes plus onéreuses.

La présente invention a pour objectif de palier un ou plusieurs inconvénients de l'art antérieur en fournissant une encre de couverture adaptée pour limiter les risques d'altération des têtes d'impression, fonctionnant dans des intervalles de température qui n'imposent pas un chauffage important du vernis lors de son dépôt sur le substrat imprimé et/ou adapté pour des têtes d'impression nécessitant des produits de faibles viscosités et/ou adapté à un séchage et/ou une polymérisation rapide permettant ainsi de maintenir des cadences d'impression élevées et/ou évitant de chauffer les substrats.

Cet objectif est atteint grâce à un vernis selon les revendications de 1 à 18, pour recouvrir la surface d'un substrat et déposé par jet d'encre dont la composition du vernis comprend au moins :
- un oligomère durcissable ou un mélange d'oligomères durcissables,
- un monomère durcissable, au moins un monomère durcissable présent dans la composition étant sélectionné dans un groupe constitué de monomères acryliques alkoxylés et/ou poly-alkoxylés comprenant un ou plusieurs di ou tri-acrylates, et
- un photo-initiateur,
caractérisé en ce que l'oligomère durcissable ou le mélange d'oligomères durcissables ne sont pas des oligomères hyperbranchés (aussi dénommés dendrimères), n'est pas un oligomère hyperbranché (aussi dénommé dendrimère), en ce qu'au moins un photo-initiateur est un oxyde de bis-(2,4,6-triméthylbenzoyl)-phénylphosphine, et en ce qu'au moins un oligomère durcissable présente une viscosité supérieure à 0,1 Pa.s à 23 °C et inférieure à 1 Pa.s à 23 °C, et en ce que le rapport en poids entre oligomère durcissable et monomère durcissable est compris entre 1/25 et 1/6 , et en ce que le vernis présente une viscosité comprise entre 5 mPa.s et 40 mPa.s à 25 °C, de préférence inférieure à 22 mPa.s à 25 °C, par exemple inférieure à 15 mPa.s à 25 °C, et une tension de surface comprise entre 19 mN/m et 35 mN/m à 25 °C.

Dans certains modes de réalisation, le vernis pour recouvrir la surface d'un substrat, par exemple d'un substrat imprimé, et déposé par jet d'encre est caractérisé en ce que le rapport en poids entre oligomère durcissable et monomère durcissable est compris entre 1/21 et 1/7.

Un objectif supplémentaire de l'invention est de proposer un procédé de production d'un vernis particulier de la présente invention.

Cet objectif est atteint grâce à un procédé de production de vernis de la présente invention, selon les revendications 19 et 20, qui comprend successivement :
- une étape de mélange d'un monomère durcissable réducteur de viscosité avec un inhibiteur de radicaux libres et un photo-initiateur à une température comprise entre 150 et 300 °C,
- une étape de refroidissement du mélange - de préférence jusqu'à une température ambiante -, et
- une étape d'ajout, au mélange ainsi refroidi, sous agitation d'au moins un oligomère durcissable selon la composition du vernis, et d'au moins un monomère durcissable additionnel selon la composition du vernis, ainsi que de tout autre élément entrant dans la composition du vernis.

Selon une particularité de réalisation, le procédé de production d'un vernis selon la présente invention est également caractérisé en ce que le procédé comprend :
- une étape de filtration du mélange obtenu selon une granulométrie adaptée pour le passage dans une buse lors d'un dépôt par jet d'encre sur le substrat imprimé.

La présente invention, selon la revendication 21, concerne également l'utilisation du vernis de la présente invention en tant que vernis dans une technologie d'impression par jet d'encre comprenant une étape de séchage et/ou de polymérisation du dit vernis, caractérisé en ce que la température à laquelle le vernis est soumis lors de son passage dans les têtes d'impression est compris entre 25 et 35°C et en ce que le séchage et/ou polymérisation du dit vernis est réalisé dans des plages de vitesse de déplacement du substrat allant de 0,05 à 10 m/s, de préférence de 0,5 à 10 m/s, par exemple de 2 à 10 m/s.

Dans certains modes de réalisation de la présente invention, l'étape de séchage et/ou de polymérisation du dit vernis comprend une exposition du vernis à un rayonnement ultraviolet, par exemple à un rayonnement UV par lampe UV conventionnelle, ou à un rayonnement UV par diode électroluminescente (LED), de préférence à un rayonnement UV par combinaison d'une diode électroluminescente (LED) et d'une lampe UV conventionnelle.

La présente invention, selon la revendication 22, concerne également l'utilisation du vernis de la présente invention - lorsque la composition du dit vernis comprend au moins un pigment et/ou un colorant tel que défini ci-après - directement en tant qu'encre. Cette nouvelle utilisation est particulièrement intéressante industriellement car elle permet au travers de l'impression par jet d'encre d'une seule composition selon la présente invention de combiner les propriétés d'encre et de vernis et de répondre ainsi de manière avantageuse aux exigences de l'utilisation recherchée.

L'invention, avec ses caractéristiques et avantages, ressortira plus clairement à la lecture de la description faite en référence au dessin annexé dans lequel :

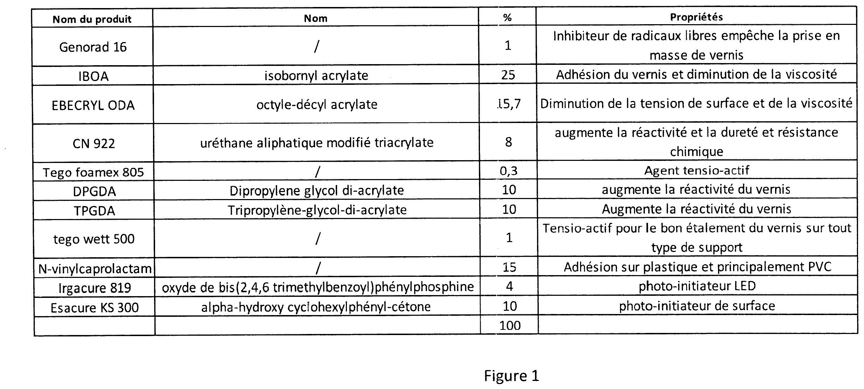

- la figure 1 représente un tableau établissant la composition du vernis selon l'invention.

Il convient de signaler que les molécules citées dans le présent document ne sont pas limitatives de la composition du vernis de l'invention, mais sont illustratives de molécules, monomères ou polymères qui possèdent ou présentent des caractéristiques, des propriétés ou des fonctions identiques ou similaires.

La présente invention porte sur un vernis de protection destiné à recouvrir la surface d'un substrat, ledit substrat pouvant par exemple et de façon non limitative être vierge ou préalablement imprimé. Ce vernis est réalisé sans solvant ; ce vernis est donc préférentiellement exempt d'eau et de solvant organique tel que, par exemple, le méthyle isobutyle cétone, le méthyle éthyle cétone, le diméthyle cétone, l'alcool isopropylique, l'alcool isobutylique, l'alcool n-butylique, l'acétate d'éthyle, l'acétate de n-butyle, l'éthyle cellosolve, le butyle cellosolve et d'autres solvants similaires.

Le dit vernis comprend donc dans sa composition au moins un oligomère durcissable, un monomère durcissable et un photo-initiateur.

Selon la présente invention au moins un des monomères durcissables est un monomère acrylique alkoxylé et/ou poly-alkoxylé comprenant un ou plusieurs di ou tri-acrylates.

Selon la revendication 1, au moins un oligomère durcissable est sélectionnée parmi les oligomères ayant une viscosité supérieure à 0,1 Pa.s à 23°C et inférieure à 1 Pa.s à 23°C ; de préférence, ces oligomères durcissables particulières représentent au moins 75% en poids total d'oligomères, de préférence au moins 95% en poids total d'oligomères durcissables ou même la totalité des oligomères durcissables composant le vernis selon la présente invention.

Il est important que le choix de l'oligomère ou du mélange d'oligomères s'opère au sein d'un groupe dont au moins un composant présente une viscosité supérieure à 0,1 Pa.s à 23°C. En effet, le mélange d'oligomères a pour objet d'augmenter la réactivité de la composition du vernis et la résistance chimique et physique de celui-ci, comme par exemple à la rayure. Cet oligomère est associée dans la composition du vernis avec différents monomères qui participent à d'autres propriétés du vernis. Selon le type d'oligomère utilisée et le niveau de viscosité recherchée pour le vernis, le rapport entre oligomère et monomère dans la composition présente une valeur comprise entre 1/25 et 1/6. Selon une mode de réalisation préféré de la composition du vernis, la valeur de ce rapport se situe préférentiellement entre 1/21 et 1/7.

Selon le type de vernis recherché, c'est-à-dire selon le type de caractéristiques physiques souhaitées en fonction du substrat à recouvrir, le choix de l'oligomère vient à différer. Dans le cas d'une polymérisation où un séchage rapide est nécessaire pour l'obtention d'un vernis qui présente une dureté ou une rigidité adaptée pour un dépôt sur un substrat formé par une surface plastique sensiblement rigide, l'oligomère choisi est un uréthane acrylate, par exemple un uréthane acrylate aromatique, par exemple un uréthane acrylate aromatique hexa-fonctionnel. Cet oligomère peut avantageusement être de l'uréthane modifié triacrylate, communément disponible sous l'appellation CN 922 et présentant une viscosité de l'ordre de 0,35 Pa.s à 25°C. Cet oligomère contribue à la diminution de la viscosité du vernis.

D'autres oligomères peuvent être utilisés dans des proportions différentes. Ces oligomères peuvent être, par exemple, un uréthane acrylate aromatique hexa-fonctionnel disponible sous l'appellation EBECRYL 220 et présentant une viscosité de l'ordre de 28,5 Pa.s à 25°C ou, par exemple, un époxy di-acrylate bisphénol A disponible sous l'appellation EBECRYL 605 présentant une viscosité de l'ordre de 7,5 Pa.s à 25°C pour obtenir un vernis plus souple qu'un vernis obtenu avec l'oligomère précédent ou, par exemple, un uréthane di-acrylate aliphatique disponible sous la dénomination EBECRYL 8402 et présentant une viscosité de l'ordre de 12,5 Pa.s à 25°C pour obtenir un vernis plus souple qu'un vernis obtenu avec les deux oligomères précédents. A titre d'exemples non limitatifs, on citera également comme oligomère durcissable les résines époxy comme le CN 104, le CN 109, l'EBECRYL 648, l'EBECRYL 3105, ou un mélange de deux ou plusieurs des oligomères époxy précités.

Dans certains modes de réalisation de la présente invention, il peut être envisagé des mélanges d'oligomères durcissables, et notamment des mélanges rassemblant les différents oligomères durcissables cités précédemment (ou ci-après), de sorte que la composition du mélange permette l'obtention d'un vernis avec des propriétés communes voire intermédiaires.

Dans certains modes de réalisation de la présente invention, les oligomères durcissables représentent de 7 à 25 % en poids du vernis, préférentiellement de l'ordre de 8 % en poids du vernis. Ces proportions restent les mêmes si un mélange de deux (ou plusieurs) oligomères est réalisé.

Dans certains modes de réalisation préférés de la présente invention, les oligomères durcissables ne sont pas des oligomères hyperbranchés (aussi dénommés dendrimères). Parmi les oligomères durcissables complémentaires qui pourraient également entrer dans la composition de vernis de la présente invention, on citera à titre d'exemple des composés uréthanes et/ou polyesters qui n'entrent pas dans la définition des oligomères particuliers essentiels de la présente invention ; s'ils sont utilisés, ces oligomères durcissables complémentaires seront pris en compte dans les calculs pondéraux relatifs à l'ensemble des oligomères durcissables.

Les monomères durcissables qui complètent la composition du vernis, en plus de présenter des capacités de durcissement sont sélectionnés par rapport à leurs propriétés.

Selon la présente invention au moins un des monomères durcissables est un monomères acryliques alkoxylés et/ou poly-alkoxylés comprenant un ou plusieurs di ou tri-acrylates. Ce type de monomères permet d'augmenter la réactivité du vernis ; il sera nommé « monomère de fonction réactivité » du vernis dans la présente description et les revendications qui suivent. On citera à titre d'exemple de ces monomères durcissables di ou tri-acrylates le tripropylène-glycol-di-acrylate et/ou le dipropylène-glycol-di-acrylate, respectivement connu sous les dénominations TPGDA et DPGDA, ou de préférence un mélange de ces deux monomères. Les monomères de fonction réactivité peuvent représenter la totalité des monomères durcissables du vernis de la présente invention. Toutefois, et ceci constitue une variante de réalisation préférée de la présente invention, les monomères de fonction réactivité représentent de 8 à 30 % en poids du vernis, de 10 à 25 % en poids du vernis, par exemple de l'ordre de 20% en poids du vernis. A titre d'exemple de monomères di-acrylates, on citera également l'hexanediol di-acrylate (HDDA), le dipropyleneglycol diacrylate, le tripropylène glycol diacrylate, le polyethylene glycol diacrylate, le propoxylated neopentylglycol diacrylate, l'esterdiol diacrylate (EDDA) et/ou le triethylene glycol diacrylate (TIEGDA). A titre d'exemple de monomères tri-acrylates, on citera également le trimethylol propane tri-acrylate, le propoxylated glycerol tri-acrylate, le propoxylated (3) trimethylolpropane triacrylate (TMP3POTA), et/ou l'ethoxylated (6) trimethylolpropane triacrylate (TMP6EOTA).

Parmi les autres monomères durcissables pouvant compléter la composition du vernis, il y a le(s) monomère(s) de fonction qui assure l'adhésion au support ; il sera nommé « monomère de fonction adhésion » du vernis dans la présente description et les revendications qui suivent. On citera à titre d'exemple préféré le N-vinylcaprolactam qui permet d'améliorer considérablement l'adhérence du vernis sur des surfaces sensiblement rigides comme des plastiques ou des PVC (polychlorures de vinyle). Le monomère de fonction adhésion peut représenter de 10 à 25% en poids du vernis, préférentiellement de 8 à 15% en poids du vernis, par exemple de l'ordre de 15% en poids du vernis.

Ainsi, dans certains modes de réalisation préférés de la présente invention, le vernis comprend en plus de l'oligomère durcissable et du photo-initiateur, au moins deux monomères durcissables, le(s) premier(s) étant choisi(s) parmi les monomères de fonction réactivité et le(s) deuxième(s) étant choisi(s) parmi les monomères de fonction adhésion.

Parmi les autres monomères durcissables pouvant compléter la composition du vernis, il y a le(s) monomère(s) de fonction qui permette(nt) une réduction de la viscosité du vernis; il sera nommé « monomère de fonction viscosité » du vernis dans la présente description et les revendications qui suivent. On citera à titre d'exemple les alkyles acrylates aliphatiques ayant plus de cinq atomes de carbone ; par exemple, l'octyle-decyl-acrylate (qui a également pour propriété de restreindre les tensions de surface dans le vernis) connu sont le nom de EBECRYL ODA. Le monomère de fonction viscosité peut représenter de 5 à 25% en poids du vernis, préférentiellement de 12 à 18% en poids du vernis, par exemple de l'ordre de 15,7% en poids du vernis. A titre d'exemple de monomère de fonction viscosité, on citera également le 2(2ethoxyethoxy)ethyl acrylate (EOEOEA), le Tetrahydrofurfuryl acrylate (THFA), l'octyle acrylate, l'isodecyl acrylate (IDA), le 3,3,5 trimethyl cyclohexyl acrylate (TMCHA), l'Iso octyl acrylate (IOA), le Tridecyl acrylate (TDA), le 2-(2-éthoxyéthoxy) éthyle acrylate, et le 3,3,5, trimethyl cyclohexanol acrylate (connu sont le nom de SR 420), et/ou le Cyclic Trimethylopropane Formai Acrylate (CTFA).

Ainsi, dans certains modes de réalisation préférés de la présente invention, le vernis comprend en plus de l'oligomère durcissable et du photo-initiateur, au moins trois monomères durcissables, le(s) premier(s) étant choisi(s) parmi les monomères de fonction réactivité, le(s) deuxième(s) étant choisi(s) parmi les monomères de fonction adhésion, et le(s) troisième(s) étant choisi(s) parmi les monomères de fonction viscosité.

Parmi les autres monomères durcissables pouvant compléter la composition du vernis, il y a le(s) monomère(s) de fonction polyvalent(s) ; il sera nommé « monomère de fonction polyvalent » du vernis dans la présente description et les revendications qui suivent car il peut avoir plusieurs fonctions simultanées comme par exemple un effet sur la viscosité et/ou l'adhésion et/ou encore d'autres propriétés complémentaires. On citera à titre d'exemple la famille des monomères durcissables de type cycloalkyle acrylate, en particulier l'isobornyl acrylate (IBOA). Ces monomères durcissables complémentaires peuvent représenter de 20 à 30% en poids du vernis, par exemple de l'ordre de 25% en poids du vernis.

La réaction de polymérisation lorsque le vernis est projeté sur la surface du substrat, est initiée par au moins un photo-initiateur qui peut être de profondeur ou de surface. Selon les présentes revendications, au moins un photoinitiateur est un oxyde de bis-(2.4,6-trimethylbenzoyl-phénylphosphine. Ces photo-initiateurs sont, par exemple, l'Irgacure 819 correspondant à l'oxyde de bis-(2,4,6-triméthylbenzoyl)-phénylphosphine. L'Esacure KS 300 correspond à l'alpha-hydroxy-cyclohexyl-phényl-cétone, l'Esacure One corresepond à une α-hydroxy cétone difonctionnelle (avec un pic d'absorption à 260 nm). On peut avoir de préférence un mélange d'au moins deux des photo-initiateurs précités, par exemple un mélange de l'Irgacure 819 et de l'Esacure KS 300 ou, de préférence, un mélange de l'Irgacure 819 et de l'Esacure One. Ces photo-initiateurs permettent le déclenchement de la réaction de polymérisation du vernis. Les pics d'absorption utilisés pour assurer la formation de radicaux libres qui initient la polymérisation du vernis présentent généralement une longueur d'onde de l'ordre de 365 nm à 420 nm pour l'Irgacure 819 et une longueur d'onde de l'ordre de 254 nm à 320 nm pour l'Esacure KS 300. L'Esacure KS 300 est un photo-initiateur de surface déclenchant une réaction de polymérisation du vernis uniquement en présence d'un rayonnement ultraviolet. Ce rayonnement peut être assuré, par exemple, grâce à un dispositif disposé dans le système d'impression qui utilise le vernis. L'Irgacure 819 est un photo-initiateur de profondeur déclenchant une réaction de polymérisation du vernis en présence du rayonnement d'au moins une diode électroluminescente (LED). Ce rayonnement peut être assuré, par exemple, grâce un dispositif comprenant au moins une LED disposée dans le système d'impression qui utilise le vernis. De façon non limitative, la ou les LED utilisées ont une irradiance de l'ordre de 2 W/cm² à 10 W/cm², préférentiellement 8 W/cm² avec une longueur d'onde de l'ordre de 365 nm à 420 nm, préférentiellement 405 nm. Ainsi, le moyen de séchage UV et le dispositif de LED permet un séchage et une polymérisation du vernis très efficace pour un vernis de faible viscosité sans diminuer pour autant les cadences d'impression. D'autres photo-initiateurs pourraient être utilisés, par exemple et de manière non limitative, le phényl-(2,4,6-triméthylbenzoyl)-phosphinate d'éthyle, le 2,4,6-trimethylbenzophenone, le 4-methylbenzophenone, le Benzyldimethylketal, le 2-hydroxy-2-methyl-1-phenyl-1-propanone, et/ou l'ethyl-4-dimethylamino benzoate.

Les photo-initiateurs peuvent représenter moins de 20% en poids du vernis, préférentiellement de 8 à 15% en poids du vernis, par exemple de l'ordre de 14% en poids du vernis. Dans certains modes de réalisation préférés de la présente invention, le vernis comprend l'Esacure KS 300 et l'Irgacure 819, avec respectivement l'Esacure KS 300 qui représente de 4,0 à 10,0% en poids du vernis, par exemple de l'ordre de 10% en poids du vernis, et l'Irgacure 819 qui représente de 2,0 à 4,9% en poids du vernis, par exemple 4% en poids du vernis. Selon une autre variante de réalisation préférée de la présente invention, le vernis comprend l'Esacure One et l'Irgacure 819, avec respectivement l'Esacure One qui représente de 3,0 à 10,0% en poids du vernis, par exemple de l'ordre de 4% en poids du vernis, et l'Irgacure 819 qui représente de 2,0 à 4,9% en poids du vernis, par exemple 4% en poids du vernis.

Afin d'obtenir un étalement optimal du vernis sur la surface du support, la composition du vernis selon la présente invention peut intégrer de manière avantageuse un agent tensio-actif qui peut, par exemple, être le mélange répertorié sous le nom Tego Wett 500. Les agents tensio-actifs peuvent être utilisés tels que, par exemple et de façon non limitative, le polyéther siloxane, l'alcool alkoxylé, un fluoro-surfactant, ou encore un surfactant « sans silicone ». L'agent tensio-actif peut représenter moins de 3% en poids du vernis, préférentiellement de 0,1 à 2,0% en poids du vernis, par exemple de l'ordre de 1,0% en poids du vernis.

Afin d'éviter une prise en masse du vernis sous l'action de la chaleur dans des conditions non-désirées, le vernis selon la présente invention peut intégrer un antioxydant qui joue le rôle d'inhibiteur de radicaux libres. Cette inhibition peut être assurée, par exemple, en intégrant dans la composition un mélange référencé sous le nom de Genorad 16 ou d'Additol S110. L'antioxydant peut représenter moins de 3% en poids du vernis, préférentiellement de 0,1 à 2,0% en poids du vernis, par exemple de l'ordre de 1,0% en poids du vernis.

Ainsi, dans certains modes de réalisation de la présente invention, le vernis (pour recouvrir la surface d'un substrat et déposé par jet d'encre) a une composition qui comprend au moins :
- un oligomère durcissable,
- un monomère durcissable,
- un photo-initiateur,
- un agent tensio-actif, et
- un antioxydant.

Ces cinq composants représentent de préférence au moins 70% en poids du vernis, de préférence au moins 85% en poids, par exemple au moins 95% en poids, ou même la totalité du vernis de la présente invention.

Les différents composants qui permettent la réalisation du vernis de l'invention peuvent également être mélangés dans des proportions déterminées. Ainsi, à titre d'exemple non-limitatif, on peut avoir :
- l'inhibiteur, Genorad 16, qui est présent dans une proportion de 0,1% à 2,0%, préférentiellement dans une proportion de 1,0% du mélange final,
- le tensioactif, Tego Wett 500, qui est présent dans une proportion de 0,1% à 2,0%, préférentiellement dans une proportion de 1,0% du mélange final,
- les photo-initiateurs de surface sont présent dans une proportion de 8% à 15%, préférentiellement dans une proportion de 14%, avec respectivement de l'Esacure KS 300 dans une proportion de 4,0% à 10,0%, préférentiellement 10% et de l'Irgacure 819 dans une proportion de 2,0% à 4,9%, préférentiellement 4% du mélange final,
- le monomère de fonction qui assure l'adhésion au support, c'est-à-dire le N-vinylcaprolactam, est présent dans une proportion de 8% à 15%, préférentiellement dans une proportion de 15% du mélange final,
- le monomère de fonction qui améliore la réactivité du mélange, c'est-à-dire le tripopylène-glycol-di-acrylate ou TPGDA, est présent dans une proportion de 10% à 25%, préférentiellement dans une proportion de 10% chacun du mélange final,
- le monomère de fonction qui permet la réduction de la tension de surface et de la viscosité, c'est-à-dire l'EBECRYL ODA, est présent dans une proportion de 12% à 18%, préférentiellement dans une proportion de 15,7% du mélange final,
- le monomère de fonction polyvalent, c'est-à-dire l'isobornyl acrylate (IBOA), est présent dans une proportion de 20 à 30 %, préférentiellement dans une proportion de 25% du mélange final, et
- l'oligomère durcissable, c'est-à-dire l'uréthane modifié triacrylate, (CN 922) est présent dans une proportion de 7 à 25 %, préférentiellement dans une proportion de 8 % du mélange final. Ces proportions restent les mêmes si un mélange de ces deux oligomères est réalisé.

L'ensemble des composants que sont l'oligomère ou mélange d'oligomères, le monomère de fonction activateur de réaction qu'est le dipropylène-glycol-di-acrylate ou DPGDA, et le monomère de fonction polyvalent qu'est l'IBOA, forment un mélange qui représente 25% à 35% de la composition finale, préférentiellement 35%. Les proportions sont comprises entre 5% et 15%, préférentiellement 10% pour le DPGDA et entre 20% et 30%, préférentiellement 25% pour l'IBOA.

Selon le type de vernis qu'on souhaite réaliser, des éléments additionnels peuvent être ajoutés aux composants.

Ainsi, pour la conception de vernis mât ou satin, des agents mâtant peuvent être apportés au mélange.

Pour l'obtention d'un vernis pailleté, on ajoutera des paillettes.

Dans certains modes de réalisation de la présente invention, le vernis pour recouvrir la surface d'un substrat et déposé par jet d'encre est caractérisé en ce que la composition du vernis comprend au moins un agent colorant. Ceci permet de conférer à l'encre une couleur particulière.

L'agent colorant peut être choisi parmi les colorants, les pigments ou une combinaison des pigments et/ou colorants. Dans certains modes de réalisation de la présente invention, l'agent colorant représente de 0.1 à 35 % en poids du vernis, préférentiellement de l'ordre de 1 à 10 % en poids du vernis. Les concentrations élevées d'agent colorant concernent en général les colorants de couleur blanche.

Les revêtements de vernis transparents ont quant à eux une concentration préférée de 0% en agent colorant.

Des exemples de pigments appropriés comprennent, mais ne sont pas limités à ceux sous le nom de Pigment Bleu (par exemple le Pigment Bleu 1, 15, 15:1, 15 :2, 15:3, 15:4, 15:6, 16, 24 ou 60), Pigment Brun (par exemple le Pigment Brun 5, 23 ou 25), Pigment Jaune (par exemple le Pigment Jaune 3, 14, 16, 17, 24, 65, 73, 74, 83, 95, 97, 108, 109, 110, 113, 120, 128, 129, 138, 139, 150, 154, 156 ou 175), Pigment Vert (par exemple le Pigment Vert 1, 7, 10 ou 36), Pigment Orange (par exemple le Pigment orange 5, 15, 16, 31, 34, 36, 43, 48, 51, 60, 61 ou 71), Pigment Rouge (par exemple le Pigment Rouge 4, 5, 7, 9, 22, 23, 48, 48:2, 49, 112, 122, 123, 149, 166 , 168, 170, 177, 179, 190, 202, 206, 207 ou 224), Pigment Violet (par exemple le Pigment Violet 19, 23, 32, 37 ou 42), Pigment Noir (par exemple le Pigment Noir 6 ou 7) - les numérotations de pigments colorés correspondants au « Colour Index, Volumes 1-8, édité par la Société des teinturiers et coloristes, Yorkshire, Angleterre - ; on citera également le Noir PB 2 et 5; le noir de carbone ; le dioxyde de titane (y compris le rutile et l'anatase); le sulfure de zinc ; ou un mélange de deux ou plusieurs des pigments précités.

Lorsqu'un pigment utilisé dans les compositions d'encre de la présente invention, on préférera procéder à la pré-dispersion du dit pigment dans un ou plusieurs des monomères durcissables et/ou oligomères durcissables, avant l'incorporation de ce(s) dernier(s) dans le vernis. On préférera également utiliser des agents de dispersion afin d'améliorer la stabilité de la dispersion des pigments ; en effet, ces agents de dispersion permettent de réduire ou même d'éviter tout phénomène de dépose et/ou d'agglomération des pigments.

La présente invention concerne donc également l'utilisation du vernis de la présente invention - lorsque la composition du dit vernis comprend au moins un pigment et/ou un colorant tel que défini ci-après - directement en tant qu'encre. Cette nouvelle utilisation est particulièrement intéressante industriellement car elle permet au travers de l'impression par jet d'encre d'une seule composition selon la présente invention de combiner les propriétés d'encre et de vernis et de répondre ainsi de manière avantageuse aux exigences de l'utilisation recherchée.

Le vernis peut intégrer dans sa composition au moins une résine - différente des résines de type oligomère durcissable déjà citées ci-dessus - choisie parmi les résines acryliques, vinyliques, cétoniques, polyesters, et aldéhydes. Cette résine peut être ajoutée dans la composition dans une proportion de l'ordre de 5 à 10% en poids du mélange final. Le choix de la résine est fonction du support et selon le résultat recherché. Ces résines ont par exemple comme propriétés d'améliorer la résistance chimique de la composition finale et la résistance mécanique du vernis déposé. Un exemple de résine vinylique susceptible d'apporter des propriétés d'adhérence au substrat peut être la résine connu sous la référence VYHH.

Le mélange des composants du vernis a une viscosité de l'ordre de 5 mPa.s à 40 mPa.s à 25°C, préférentiellement 10 mPa.s à 15 mPa.s, préférentiellement 12 mPa.s.

La production du vernis selon l'invention est opérée en effectuant successivement :
- une étape de mélange du réducteur de viscosité avec l'inhibiteur de radicaux libres et un photo-initiateur à une température comprise entre 150°C et 300°C selon la vitesse du mélange désirée,
- une étape de refroidissement du mélange jusqu'à une température ambiante,
- une étape d'ajout sous agitation d'au moins un oligomère durcissable selon la composition du vernis, et/ou d'au moins un monomère durcissable selon la composition du vernis, ainsi que de tout autre élément entrant dans la composition du vernis.

Selon un mode opératoire préféré, l'agent tensio-actif est ajouté en dernier pour éviter la formation de mousses lors de l'agitation des composants en cours de mélange. Pour limiter cette apparition de mousses, des agents démoussants peuvent être ajoutés dans le mélange, tels que du polyéther siloxane. Cet agent dé-moussant ou anti-mousse est ainsi ajouté dans une proportion de 0,1% à 1,0% en poids du vernis, préférentiellement 1% en poids. Un exemple d'agent tensio-actif susceptible d'être utilisé est le Tego Foamex 805.

Ainsi, dans certains modes de réalisation de la présente invention, le vernis (pour recouvrir la surface d'un substrat et déposé par jet d'encre) a une composition qui comprend au moins :
- un oligomère durcissable,
- un monomère durcissable,
- un photo-initiateur,
- un agent tensio-actif,
- un antioxydant, et
- un agent anti-mousse.

Ces six composants représentent de préférence au moins 70% en poids du vernis, de préférence au moins 85% en poids, par exemple au moins 95% en poids, ou même la totalité du vernis de la présente invention.

Le procédé de production peut également comprendre une étape de filtration du mélange obtenu selon une granulométrie adaptée pour le passage dans une buse lors d'un dépôt par jet d'encre sur le substrat imprimé. Le dépôt par jet d'encre peut s'opérer selon une toute technique connue de dépôt par jet d'encre, préférentiellement la technique de goutte à la demande (*drop on demand* ou DOD en anglais), qui consiste à former une surpression en utilisant un composant piézo-électrique qui va s'incurver sous l'effet d'une tension électrique pour réduire le volume du réservoir d'encre. En effet, la projection du vernis s'opérant par l'intermédiaire d'une buse, il est impératif que la granulométrie des composants du vernis n'entraine pas une obstruction de la buse. Ainsi, la filtration est réalisée à 10 µm, préférentiellement à 5 µm et de façon optimale à 1 µm.

Dans certains modes de réalisation, le vernis pour recouvrir la surface d'un substrat imprimé et déposé par jet d'encre est caractérisé en ce que la composition du vernis comprend au moins :
- un réducteur de viscosité qui facilite l'adhésion du vernis au substrat imprimé, et/ou
- un inhibiteur de radicaux libres.

Selon une autre variante de réalisation, le vernis pour recouvrir la surface d'un substrat imprimé et déposé par jet d'encre est caractérisé en ce que le mélange des composants du vernis présente une conductivité inférieure à 1,5 µS.

Selon une première particularité de réalisation, le vernis pour recouvrir la surface d'un substrat imprimé et déposé par jet d'encre est caractérisé en ce que le photo-initiateur comprend en outre de l'alpha-hydroxy-cyclohexylphényl-cétone.

Dans certains modes de réalisation, le vernis pour recouvrir la surface d'un substrat imprimé et déposé par jet d'encre est caractérisé en ce que le vernis comprend du N-vinylcaprolactam pour assurer l'adhésion du vernis sur la surface du substrat imprimé.

Selon une particularité de réalisation, le vernis pour recouvrir la surface d'un substrat imprimé et déposé par jet d'encre est caractérisé en ce que l'oligomère durcissable dont la viscosité est supérieure à 0,1 Pa.s à 23°C comprend au moins un uréthane di- et/ou tri-acrylate aliphatique.

Selon une autre particularité de réalisation, le vernis pour recouvrir la surface d'un substrat imprimé et déposé par jet d'encre est caractérisé en ce que l'oligomère durcissable comprend au moins un uréthane acrylate aromatique hexa-fonctionnel.

Selon une autre particularité de réalisation, le vernis pour recouvrir la surface d'un substrat imprimé et déposé par jet d'encre est caractérisé en ce que l'oligomère durcissable comprend au moins un époxy di-acrylate bisphénol A.

Dans certains modes de réalisation, le vernis pour recouvrir la surface d'un substrat imprimé et déposé par jet d'encre est caractérisé en ce que la composition du vernis comprend au moins un additif avec une granulométrie inférieure à 50 µm, cet additif étant :
- un agent mâtant pour l'obtention d'un vernis mât ou satin, et/ou
- des paillettes pour l'obtention d'un vernis pailleté, et/ou
- de pigments et/ou colorants pour l'obtention d'un vernis coloré, et/ou
- de pigments et/ou colorants fluorescents pour l'obtention d'un vernis fluorescent, et/ou
- de pigments et/ou colorants sensible à la lumière noire pour l'obtention d'un vernis à effet optique.

Dans certains modes de réalisation, le vernis pour recouvrir la surface d'un substrat (par exemple un substrat imprimé) et déposé par jet d'encre est caractérisé en ce que la composition du vernis comprend une granulométrie adaptée pour le passage dans une buse lors d'un dépôt par jet d'encre sur le substrat imprimé.

Selon un mode opératoire préféré, mais qui n'est pas limitatif de l'invention, la détermination des paramètres physiques des composants ou de la composition de la demande est opérée aux températures indiquées et dans des conditions de pressions habituelles à la surface terrestre, préférentiellement de l'ordre d'une atmosphère (1013 mBar). C'est ainsi que la viscosité peut être mesurée à l'aide d'un viscosimètre HAAKE Viscotester 550 équipé d'un Cup NV et d'un Rotor NV qui sont des instruments de mesure connus, commercialisé par la société ThermoFisher, faisant intervenir un système de régulation de température, branché sur un bain thermostaté, maintient l'échantillon de vernis à une température de 25[deg.]C. De même, la tension de surface est mesurée à l'aide d'un tensiomètre DSA 100 avec la méthode de la goutte pendante, commercialisé par la société KRÜSS. Les granulométrie et conductivité sont respectivement mesurées à l'aide d'une part d'un appareil de mesure de taille de particules appelé MASTERSIZER 2000, commercialisé par la société MALVERN, et d'autre part d'un conductimètre CYBERSCAN CON 11 de EUTECH INSTRUMENTS avec une cellule de mesure de référence ECCONSEN91W/35608-50 dont la constante de cellule est de K=1.0.

## Revendications

1. Vernis pour recouvrir la surface d'un substrat et déposé par jet d'encre, dont la composition du vernis comprend au moins :
- un oligomère durcissable ou un mélange d'oligomères durcissables,
- un monomère durcissable, au moins un monomère durcissable présent dans la composition étant sélectionné dans un groupe constitué de monomères acryliques alkoxylés et/ou poly-alkoxylés comprenant un ou plusieurs di ou tri-acrylates, et
- un photo-initiateur,
**caractérisé en ce que** l'oligomère durcissable ou le mélange d'oligomères durcissables ne sont pas des oligomères hyperbranchés (aussi dénommés dendrimères), n'est pas un oligomère hyperbranché (aussi dénommé dendrimère), **en ce qu'**au moins un photo-initiateur est un oxyde de bis-(2.4,6- triméthylbenzoyl)-phénylphosphine, et **en ce qu'**au moins un oligomère durcissable présente une viscosité supérieure à 0,1 Pa.s à 23°C et inférieure à 1 Pa.s à 23 °C, et **en ce que** le rapport en poids entre oligomère durcissable et monomère durcissable est compris entre 1 /25 et 1/6, et **en ce que** le vernis présente une viscosité comprise entre 5 m Pa.s et 40 m Pa.s à 25 °C (mesurée selon la méthode décrite dans la présente description).

2. Vernis selon la revendication précédente **caractérisé par** une viscosité inférieure à 22 mPa.s à 25 °C.

3. Vernis selon l'une quelconque des revendications précédentes **caractérisé en ce qu'**au moins un oligomère durcissable est sélectionné parmi les oligomères ayant une viscosité supérieure à 0,1 Pa.s à 23 °C et inférieure à 1 Pa.s à 23 °C, et **en ce que** les dits oligomères durcissables sélectionnés représentent au moins 75% en poids, de préférence au moins 95% en poids ou même la totalité des oligomères durcissables composant le vernis.

4. Vernis selon l'une quelconque des revendications précédentes **caractérisé en ce que** l'oligomère durcissable est une uréthane modifiée triacrylate.

5. Vernis selon l'une quelconque des revendications précédentes **caractérisé en ce que** les oligomères durcissables représentent de 7 à 25 % en poids du vernis, préférentiellement de l'ordre de 8 % en poids du vernis.

6. Vernis selon l'une quelconque des revendications précédentes **caractérisé en ce que** l'au moins un monomère durcissable sélectionné dans un groupe constitué de monomères acryliques alkoxylés et/ou poly- alkoxylés comprenant un ou plusieurs di ou tri-acrylates représentent de 8 à 30% en poids du vernis, de préférence de 10 à 25 % en poids du vernis, par exemple de l'ordre de 20% en poids du vernis.

7. Vernis selon l'une quelconque des revendications précédentes **caractérisé en ce que** les monomères di-acrylates et tri-acrylates sont choisis parmi l'hexanediol di-acrylate (HDDA), le dipropyleneglycol diacryiate, le tripropylène glycol diacryiate, le polyethylene glycol diacryiate, le propoxyiated neopentylglycol diacryiate, l'esterdiol diacryiate (EDDA), le triethylene glycol diacryiate (T1EGDA), le trimethylol propane tri-acrylate, le propoxyiated glycerol tri-acrylate, le propoxyiated (3) trimethylolpropane triacrylate (TMP3POTA), l'ethoxylated (6) trimethylolpropane triacrylate (TMP6EOTA), ou un mélange de deux ou plusieurs de ces monomères, de préférence parmi le tripropylène-glycol- di-acrylate (TPGDA) et/ou le dipropylène-glycol-di-acrylate (DPGDA), et de préférence un mélange de TPGDA et de DPGDA.

8. Vernis selon l'une quelconque des revendications précédentes **caractérisé en ce que** les monomères durcissables complétant la composition du vernis comprennent au moins un monomère de fonction qui assure l'adhésion au substrat, de préférence le N-vinylcaprolactam.

9. Vernis selon la revendication précédente **caractérisé en ce que** le monomère de fonction qui assure l'adhésion au substrat représente de 10 à 25% en poids du vernis, de préférence de 8 à 15% en poids du vernis, par exemple de l'ordre de 15% en poids du vernis.

10. Vernis selon l'une quelconque des revendications précédentes **caractérisé en ce que** les monomères durcissables complétant la composition du vernis comprennent au moins un monomère de fonction qui permet une réduction de la viscosité du vernis.

11. Vernis selon la revendication précédente **caractérisé en ce que** le monomère de fonction qui permet une réduction de la viscosité du vernis est choisi parmi les alkyles acrylates aliphatiques ayant plus de cinq atomes de carbone, par exemple l'octyle- decyl-acrylate (ODA), le 3,3,5, trimethyl cyclohexanol acrylate, le 2(2ethoxyethoxy)ethyl acrylate (EOEOEA), le Tetrahydrofurfuryl acrylate (THFA), l'octyle acrylate, l'isodecyl acrylate (IDA), le 3,3,5 trmethyl cyclohexyl acrylate (TMCHA), l <'>Iso octyl acrylate (IOA), le Tridecyl acrylate (TDA), le 2-(2-éthoxyéthoxy) éthyle acrylate, le Cyclic Trimethylopropane Formai Acrylate (CTFA), ou un mélange de deux ou plusieurs de ces monomères, de préférence l'ODA.

12. Vernis selon la revendication précédente **caractérisé en ce que** le monomère de fonction qui permet une réduction de la viscosité du vernis représente de 5 à 25% en poids du vernis, préférentiellement de 12 à 18% en poids du vernis, par exemple de l'ordre de 15,7% en poids du vernis.

13. Vernis selon l'une quelconque des revendications précédentes **caractérisé en ce que** le photo-initiateur est choisi parmi l'oxyde de bis- (2,4,6-triméthylbenzoyl)-phénylphosphine (par exemple l <'>Irgacure 819), l'aipha-hydroxy-cyclohexyl-phényl-cétone (par exemple I Esacure KS 300) et le α-hydroxy cétone difonctionnelle (par exemple l'Esacure One), ou de préférence un mélange d'au moins deux des photo-initiateurs précités, par exemple un mélange de l'Irgacure 81 9 et de l <'>Esacure KS 300 ou un mélange de l'Irgacure 819 et de l'Esacure One.

14. Vernis selon l'une quelconque des revendications précédentes **caractérisé en ce que** les photo-initiateurs représentent moins de 20% en poids du vernis, préférentiellement de 8 à 15% en poids du vernis, par exemple de l'ordre de 14% en poids du vernis.

15. Vernis selon l'une quelconque des revendications précédentes **caractérisé en ce que** la composition du vernis comprend également au moins
- un agent tensio-actif, et/ou
- au moins un antioxydant, et/ou
- au moins un agent anti-mousse.

16. Vernis selon la revendication précédente **caractérisé en ce que** le vernis comprend au moins les six composants suivants,
- oligomère durcissable,
- monomère durcissable,
- photo-initiateur,
- agent tensio-actif,
- antioxydant, et
- agent anti-mousse,
ces six composants représentant de préférence au moins 70% en poids du vernis, de préférence au moins 85% en poids, par exemple au moins 95% en poids, ou même la totalité du vernis.

17. Vernis selon l'une quelconque des revendications précédentes **caractérisé en ce que** la composition du vernis comprend également un ou plusieurs agents colorants, l'agent colorant représentant préférentiellement de 0,1 à 35 % en poids du vernis, plus préférentiellement de l'ordre de 1 à 10 % en poids du vernis.

18. Vernis selon l'une quelconque des revendications précédentes **caractérisé en ce que** sa conductivité mesurée par un conductimètre du type CYBERSCAN CON 11 de EUTECH INSTRUMENTS avec une cellule de mesure de référence ECCONSEN91W /35608-50 dont la constante de cellule est de K=1.0 est inférieure à 1 ,5 µS.

19. Procédé de production du vernis selon l'une quelconque des revendications précédentes comprenant successivement :
- une étape de mélange d'un monomère durcissable réducteur de viscosité avec un inhibiteur de radicaux libres et un photo-initiateur à une température comprise entre 150 et 300 °C,
- une étape de refroidissement du mélange - de préférence jusqu'à une température ambiante -, et
- une étape d'ajout, au mélange ainsi refroidi, sous agitation d'au moins un oligomère durcissable selon la composition du vernis, et d'au moins un monomère durcissable additionnel selon la composition du vernis, ainsi que de tout autre élément entrant dans la composition du vernis.

20. Procédé de production d'un vernis selon la revendication précédente **caractérisé en ce que** le procédé comprend une étape de filtration du mélange obtenu selon une granulométrie adaptée pour le passage dans une buse lors d'un dépôt par jet d'encre sur le substrat.

21. Utilisation du vernis de l'une quelconque des revendications 1 à 18 en tant que vernis et/ou encre dans une technologie d'impression par jet d'encre comprenant une étape de séchage et/ou de polymérisation du dit vernis et/ou de la dite encre, **caractérisé en ce que** la température à laquelle le vernis et/ou l'encre est soumis lors de son passage dans les têtes d'impression est compris entre 25 et 35 °C et **en ce que** le séchage et/ou polymérisation du dit vernis est réalisé dans des plages de vitesse de déplacement du substrat allant de 0,05 à 10 m/s, de préférence de 0,5 à 10 m/s, par exemple de 2 à 10 m/s.

22. Utilisation du vernis de l'une quelconque des revendications 1 à 18 dans une technologie d'impression par jet d'encre **caractérisé en ce que** la technologie comprend une étape de séchage et/ou de polymérisation du dit vernis et **en ce que** cette étape comprend une exposition du vernis à un rayonnement ultraviolet, par exemple à un rayonnement UV par lampe UV conventionnelle, ou à un rayonnement UV par diode électroluminescente (LED), de préférence à un rayonnement UV par combinaison d'une diode électroluminescente (LED) et d'une lampe UV conventionnelle.

## Patentansprüche

1. Lack zum Beschichten der Oberfläche eines Substrats, der durch Tintenstrahl aufgebracht wird, wobei die Zusammensetzung des Lacks mindestens Folgendes umfasst:
- ein härtbares Oligomer oder ein Gemisch von härtbaren Oligomeren,
- ein härtbares Monomer, wobei mindestens ein in der Zusammensetzung vorliegendes härtbares Monomer ausgewählt ist aus einer Gruppe bestehend aus alkoxylierten und/oder polyalkoxylierten Acrylmonomeren, die ein oder mehrere Di- oder Triacrylate umfassen, und
- einen Photoinitiator,
**dadurch gekennzeichnet, dass** das härtbare Oligomer oder das Gemisch von härtbaren Oligomeren keine hyperverzweigten Oligomere (auch Dendrimere genannt) sind, dadurch, dass mindestens ein Photoinitiator ein Bis-(2,4,6-Trimethylbenzoyl)-phenylphosphinoxid ist, und dadurch, dass mindestens ein härtbares Oligomer eine Viskosität von mehr als 0,1 Pa.s bei 23°C und weniger als 1 Pa.s bei 23°C aufweist, und dadurch, dass das Gewichtsverhältnis zwischen härtbarem Oligomer und härtbarem Monomer zwischen 1:25 und 1:6 liegt, und dadurch, dass der Lack eine Viskosität zwischen 5 mPa.s und 40 mPa.s bei 25°C aufweist (gemessen mit dem in der vorliegenden Beschreibung beschriebenen Verfahren).

2. Lack nach dem vorherigen Anspruch, **gekennzeichnet durch** eine Viskosität von weniger als 22 mPa.s bei 25°C.

3. Lack nach einem der vorherigen Ansprüche, **dadurch gekennzeichnet, dass** mindestens ein härtbares Oligomer aus den Oligomeren mit einer Viskosität von mehr als 0,1 Pa.s bei 23°C und weniger als 1 Pa.s bei 23°C ausgewählt ist, und dadurch, dass die genannten ausgewählten härtbaren Oligomere mindestens 75 Gew.-%, vorzugsweise mindestens 95 Gew.-% oder sogar die Gesamtheit der härtbaren Oligomere ausmachen, aus denen der Lack besteht.

4. Lack nach einem der vorherigen Ansprüche, **dadurch gekennzeichnet, dass** das härtbare Oligomer ein modifiziertes Urethantriacrylat ist.

5. Lack nach einem der vorherigen Ansprüche, **dadurch gekennzeichnet, dass** die härtbaren Oligomere 7 bis 25 Gew.-% des Lacks, vorzugsweise etwa 8 Gew.-% des Lacks ausmachen.

6. Lack nach einem der vorherigen Ansprüche, **dadurch gekennzeichnet, dass** das mindestens eine härtbare Monomer, ausgewählt aus der Gruppe bestehend aus alkoxylierten und/oder polyalkoxylierten Acrylmonomeren, die ein oder mehrere Di- oder Triacrylate umfassen, 8 bis 30 Gew.-% des Lacks, vorzugsweise 10 bis 25 Gew.-% des Lacks, beispielsweise etwa 20 Gew.-% des Lacks ausmacht.

7. Lack nach einem der vorherigen Ansprüche, **dadurch gekennzeichnet, dass** die Diacrylat- und Triacrylat-Monomere ausgewählt sind aus Hexandioldiacrylat (HDDA), Dipropylenglykoldiacrylat, Tripropylenglykoldiacrylat, Polyethylenglykoldiacrylat, propoxyliertem Neopentylglykoldiacrylat, Esterdioldiacrylat (EDDA), Triethylenglykoldiacrylat (T1EGDA), Trimethylolpropantriacrylat, propoxyliertem Glycerintriacrylat, propoxyliertem (3) Trimethylolpropantriacrylat (TMP3POTA), ethoxyliertem (6) Trimethylolpropantriacrylat (TMP6EOTA) oder einem Gemisch aus zwei oder mehreren dieser Monomere, vorzugsweise aus Tripropylenglykoldiacrylat (TPGDA) und/oder Dipropylenglykoldiacrylat (DPGDA), und vorzugsweise einem Gemisch aus TPGDA und DPGDA.

8. Lack nach einem der vorherigen Ansprüche, **dadurch gekennzeichnet, dass** die härtbaren Monomere, die die Zusammensetzung des Lacks vervollständigen, mindestens ein funktionelles Monomer enthalten, das die Haftung am Substrat gewährleistet, vorzugsweise N-Vinylcaprolactam.

9. Lack nach dem vorherigen Anspruch, **dadurch gekennzeichnet, dass** das funktionelle Monomer, das die Haftung am Substrat gewährleistet, 10 bis 25 Gew.-% des Lacks, vorzugsweise 8 bis 15 Gew.-% des Lacks, beispielsweise etwa 15 Gew.-% des Lacks ausmacht.

10. Lack nach einem der vorherigen Ansprüche, **dadurch gekennzeichnet, dass** die härtbaren Monomere, die die Zusammensetzung des Lacks vervollständigen, mindestens ein funktionelles Monomer umfassen, das eine Verringerung der Viskosität des Lacks ermöglicht.

11. Lack nach dem vorherigen Anspruch, **dadurch gekennzeichnet, dass** das funktionelle Monomer, das eine Verringerung der Viskosität des Lacks zulässt, ausgewählt ist aus aliphatischen Alkylacrylaten mit mehr als fünf Kohlenstoffatomen, beispielsweise Octyldecylacrylat (ODA), 3,3,5-Trimethylcyclohexanolacrylat, 2-(2-Ethoxyethoxy)ethylacrylat (EOEOEA), Tetrahydrofurfurylacrylat (THFA), Octylacrylat, Isodecylacrylat (IDA), 3,3,5-Trimethylcyclohexylacrylat (TMCHA), Iso-Octylacrylat (IOA), Tridecylacrylat (TDA), 2-(2-Ethoxyethoxy)ethylacrylat, cyclisches Trimethylopropan-Formai-Acrylat (CTFA) oder ein Gemisch aus zwei oder mehreren dieser Monomere, vorzugsweise ODA.

12. Lack nach dem vorherigen Anspruch, **dadurch gekennzeichnet, dass** das funktionelle Monomer, das eine Verringerung der Viskosität des Lacks ermöglicht, 5 bis 25 Gew.-% des Lacks, vorzugsweise 12 bis 18 Gew.-% des Lacks, beispielsweise etwa 15,7 Gew.-% des Lacks ausmacht.

13. Lack nach einem der vorherigen Ansprüche, **dadurch gekennzeichnet, dass** der Photoinitiator ausgewählt ist aus Bis-(2,4,6-trimethylbenzoyl)phenylphosphinoxid (z.B. Irgacure 819), Alpha-Hydroxy-cyclohexyl-phenyl-keton (z.B. Esacure KS 300) und difunktionellem α-Hydroxy-keton (z.B. Esacure One) oder vorzugsweise einem Gemisch aus mindestens zwei der vorgenannten Photoinitiatoren, z.B. einem Gemisch aus Irgacure 819 und Esacure KS 300 oder einem Gemisch aus Irgacure 819 und Esacure One.

14. Lack nach einem der vorherigen Ansprüche, **dadurch gekennzeichnet, dass** die Photoinitiatoren weniger als 20 Gew.-% des Lacks, vorzugsweise 8 bis 15 Gew.-% des Lacks, beispielsweise etwa 14 Gew.-% des Lacks ausmachen.

15. Lack nach einem der vorherigen Ansprüche, **dadurch gekennzeichnet, dass** die Zusammensetzung des Lacks außerdem mindestens Folgendes umfasst:
- ein oberflächenaktives Mittel, und/oder
- mindestens ein Antioxidans, und/oder
- mindestens ein Antischaummittel.

16. Lack nach dem vorherigen Anspruch, **dadurch gekennzeichnet, dass** der Lack mindestens die folgenden sechs Komponenten umfasst:
- härtbares Oligomer,
- härtbares Monomer,
- Fotoinitiator,
- oberflächenaktives Mittel,
- Antioxidans, und
- Antischaummittel,
wobei diese sechs Komponenten vorzugsweise mindestens 70 Gew.-% des Lacks, vorzugsweise mindestens 85 Gew.-%, z.B. mindestens 95 Gew.-% oder sogar die Gesamtheit des Lacks ausmachen.

17. Lack nach einem der vorherigen Ansprüche, **dadurch gekennzeichnet, dass** die Zusammensetzung des Lacks auch einen oder mehrere Farbstoffe umfasst, wobei der Farbstoff vorzugsweise 0,1 bis 35 Gew.-% des Lacks, bevorzugter etwa 1 bis 10 Gew.-% des Lacks ausmacht.

18. Lack nach einem der vorherigen Ansprüche, **dadurch gekennzeichnet, dass** seine Leitfähigkeit, gemessen mit einem Leitfähigkeitsmessgerät des Typs CYBERSCAN CON 11 von EUTECH INSTRUMENTS mit einer Referenzmesszelle ECCONSEN91W/35608-50, deren Zellkonstante K=1,0 ist, kleiner als 1,5 µS ist.

19. Verfahren zur Herstellung des Lacks nach einem der vorhergehenden Ansprüche, das nacheinander Folgendes beinhaltet:
- einen Schritt des Mischens eines viskositätsreduzierenden härtbaren Monomers mit einem Inhibitor für freie Radikale und einem Photoinitiator bei einer Temperatur zwischen 150 und 300°C,
- einen Schritt des Kühlens des Gemischs - vorzugsweise auf Raumtemperatur, und
- einen Schritt des Zugebens mindestens eines härtbaren Oligomers gemäß der Zusammensetzung des Lacks und mindestens eines zusätzlichen härtbaren Monomers gemäß der Zusammensetzung des Lacks sowie jedes anderen Elements, das in die Zusammensetzung des Lacks gelangt, zu dem so gekühlten Gemisch unter Rühren.

20. Verfahren zur Herstellung eines Lacks nach dem vorherigen Anspruch, **dadurch gekennzeichnet, dass** das Verfahren einen Schritt des Filterns des erhaltenen Gemischs auf eine Korngröße umfasst, die für den Durchgang durch eine Düse während der Tintenstrahlabscheidung auf dem Substrat geeignet ist.

21. Verwenden des Lacks nach einem der Ansprüche 1 bis 18 als Lack und/oder Tinte in einem Tintenstrahldruckverfahren, das einen Trocknungs- und/oder Polymerisationsschritt des genannten Lacks und/oder der genannten Tinte umfasst, **dadurch gekennzeichnet, dass** die Temperatur, der der Lack und/oder die Tinte während ihres Durchlaufs durch die Druckköpfe ausgesetzt ist, zwischen 25 und 35 °C liegt, und dadurch, dass die Trocknung und/oder Polymerisation des genannten Lacks bei einer Substratbewegungsgeschwindigkeit im Bereich von 0,05 bis 10 m/s, vorzugsweise von 0,5 bis 10 m/s, zum Beispiel von 2 bis 10 m/s, durchgeführt wird.

22. Verwenden des Lacks nach einem der Ansprüche 1 bis 18 in einem Tintenstrahldruckverfahren, **dadurch gekennzeichnet, dass** das Verfahren einen Schritt des Trocknens und/oder Polymerisierens des genannten Lacks beinhaltet, und dadurch, dass dieser Schritt das Aussetzen des Lacks ultravioletter Strahlung beinhaltet, beispielsweise UV-Strahlung durch eine herkömmliche UV-Lampe oder UV-Strahlung durch eine Leuchtdiode (LED), vorzugsweise UV-Strahlung durch eine Kombination aus einer Leuchtdiode (LED) und einer herkömmlichen UV-Lampe.

## Claims

1. Varnish for covering the surface of a substrate that is deposited by ink jet, of which the varnish composition includes at least:
- a curable oligomer or a mixture of curable oligomers,
- a curable monomer, at least one curable monomer present in the composition being selected from among a group consisting of alkoxylated and/or polyalkoxylated acrylic monomers including one or more di- or triacrylates, and
- a photoinitiator,
**characterised in that** the curable oligomer or the mixture of curable oligomers are not hyperbranched oligomers (also called dendrimers), is not a hyperbranched oligomer (also called a dendrimer), **in that** at least one photoinitiator is a bis-(2,4,6-trimethylbenzoyl)-phenylphosphine oxide, and **in that** at least one curable oligomer has a viscosity greater than 0.1 Pa s at 23°C and less than 1 Pa s at 23°C, and **in that** the ratio by weight between curable oligomer and curable monomer is between 1:25 and 1:6, and **in that** the varnish has a viscosity of between 5 mPa·s and 40 mPa·s at 25°C (measured by the method described in the present description).

2. Varnish according to the preceding claim, **characterised by** a viscosity of less than 22 mPa·s at 25°C.

3. Varnish according to any one of the preceding claims, **characterised in that** at least one curable oligomer is selected from among oligomers having a viscosity greater than 0.1 Pa·s at 23°C and less than 1 Pa·s at 23°C, and **in that** said selected curable oligomers represent at least 75% by weight, preferably at least 95% by weight or even all of the curable oligomers that make up the varnish.

4. Varnish according to any one of the preceding claims, **characterised in that** the curable oligomer is a modified urethane triacrylate.

5. Varnish according to any one of the preceding claims, **characterised in that** the curable oligomers represent from 7 to 25% by weight of the varnish, preferably of the order of 8% by weight of the varnish.

6. Varnish according to any one of the preceding claims, **characterised in that** at least one curable monomer selected from among a group consisting of alkoxylated and/or polyalkoxylated acrylic monomers including one or more di- or triacrylates represent from 8 to 30% by weight of the varnish, preferably from 10 to 25% by weight of the varnish, for example of the order of 20% by weight of the varnish.

7. Varnish according to any one of the preceding claims, **characterised in that** the monomers diacrylates and triacrylates are selected from among hexanediol diacrylate (HDDA), dipropylene glycol diacrylate, tripropylene glycol diacrylate, polyethylene glycol diacrylate, propoxylated neopentyl glycol diacrylate, esterdiol diacrylate (EDDA), triethylene glycol diacrylate (T1EGDA), trimethylol propane triacrylate, propoxylated glycerol triacrylate, propoxylated (3) trimethylol propane triacrylate (TMP3POTA), ethoxylated (6) trimethylol propane triacrylate (TMP6EOTA), or a mixture of two or more of these monomers, preferably selected from among tripropylene glycol diacrylate (TPGDA) and/or dipropylene glycol diacrylate (DPGDA), and preferably a mixture of TPGDA and DPGDA.

8. Varnish according to any one of the preceding claims, **characterised in that** the curable monomers that make up the varnish composition include at least one functional monomer that ensures adhesion to the substrate, preferably N-vinyl caprolactam.

9. Varnish according to the preceding claim, **characterised in that** the functional monomer that ensures adhesion to the substrate represents from 10 to 25% by weight of the varnish, preferably from 8 to 15% by weight of the varnish, for example of the order of 15% by weight of the varnish.

10. Varnish according to any one of the preceding claims, **characterised in that** the curable monomers that make up the varnish composition include at least one functional monomer that allows a reduction in the viscosity of the varnish.

11. Varnish according to the preceding claim, **characterised in that** the functional monomer that allows a reduction in the viscosity of the varnish is selected from among aliphatic alkyl acrylates having more than five carbon atoms, for example octyl decyl acrylate (ODA), 3,3,5-trimethylcyclohexanol acrylate, 2-(2-ethoxyethoxy) ethyl acrylate (EOEOEA), tetrahydrofurfuryl acrylate (THFA), octyl acrylate, isodecyl acrylate (IDA), 3,3,5-trimethyl cyclohexyl acrylate (TMCHA), iso-octyl acrylate (IOA), tridecyl acrylate (TDA), 2-(2-ethoxyethoxy) ethyl acrylate, cyclic trimethylolpropane formal acrylate (CTFA), or a mixture of two or more of these monomers, preferably ODA.

12. Varnish according to the preceding claim, **characterised in that** the functional monomer that allows a reduction in the viscosity of the varnish represents from 5 to 25% by weight of the varnish, preferably from 12 to 18% by weight of the varnish, for example of the order of 15.7% by weight of the varnish.

13. Varnish according to any one of the preceding claims, **characterised in that** the photoinitiator is selected from among bis-(2,4,6-trimethyl benzoyl)-phenylphosphine oxide (for example Irgacure 819), alpha-hydroxycyclohexyl phenyl ketone (for example Esacure KS 300) and difunctional α-hydroxyketone (for example Esacure One), or preferably a mixture of at least two of the aforementioned photoinitiators, for example a mixture of Irgacure 819 and Esacure KS 300 or a mixture of Irgacure 819 and Esacure One.

14. Varnish according to any one of the preceding claims, **characterised in that** the photoinitiators represent less than 20% by weight of the varnish, preferably from 8 to 15% by weight of the varnish, for example of the order of 14% by weight of the varnish.

15. Varnish according to any one of the preceding claims, **characterised in that** the varnish composition also includes at least
- one surfactant, and/or
- at least one antioxidant, and/or
- at least one anti-foaming agent.

16. Varnish according to the preceding claim, **characterised in that** the varnish includes at least the following six components:
- curable oligomer,
- curable monomer,
- photoinitiator,
- surfactant,
- antioxidant, and
- anti-foaming agent,
these six components representing preferably at least 70% by weight of the varnish, preferably at least 85% by weight, for example at least 95% by weight, or even the whole of the varnish.

17. Varnish according to any one of the preceding claims, **characterised in that** the varnish composition also includes one or more colouring agents, the colouring agent preferably representing from 0.1 to 35% by weight of the varnish, more preferably of the order from 1 to 10% by weight of the varnish.

18. Varnish according to any one of the preceding claims, **characterised in that** its conductivity measured by a conductivity meter of the CYBERSCAN CON 11 type of EUTECH INSTRUMENTS with a measuring cell of reference ECCONSEN91W /35608-50 of which the cell constant K=1.0 is lower than 1.5 µS.

19. Method for producing the varnish according to any one of the preceding claims, including successively:
- a step of mixing a viscosity-reducing curable monomer with a free radical inhibitor and a photoinitiator at a temperature of between 150 and 300°C,
- a step of cooling the mixture - preferably down to an ambient temperature - and
- a step of adding to the mixture thus cooled, while stirring, at least one curable oligomer according to the varnish composition, and at least one additional curable monomer according to the varnish composition, as well as any other element included in the varnish composition.

20. Method for producing a varnish according to the preceding claim, **characterised in that** the method includes a step of filtering the mixture obtained to a particle size adapted for passage through a nozzle during deposition by ink jet on the substrate.

21. Use of the varnish of any one of claims 1 to 18 as a varnish and/or ink in an ink jet printing technology including a step of drying and/or polymerisation of said varnish and/or said ink, **characterised in that** the temperature to which the varnish and/or ink is subjected during its passage through the print heads is between 25 and 35°C and **in that** drying and/or polymerisation of said varnish is carried out within the ranges of speed of displacement of the substrate from 0.05 to 10 m/s, preferably from 0.5 to 10 m/s, for example from 2 to 10 m/s.

22. Use of the varnish of any one of claims 1 to 18 in an ink jet printing technology, **characterised in that** the technology includes a step of drying and/or polymerisation of said varnish and **in that** this step includes exposure of the varnish to ultraviolet radiation, for example UV radiation by conventional UV lamp, or UV radiation by light-emitting diode (LED), preferably UV radiation by combining a light-emitting diode (LED) and a conventional UV lamp.
